# EUROPEAN PATENT SPECIFICATION

(11) **EP 2 321 558 B1**
(45) Date of publication and mention of the grant of the patent: **06.09.2017**
(21) Application number: 08754534.9
(22) Date of filing: 19.05.2008
(51) Int. Cl.: F16H 57/08, F24F 11/04, F16K 31/04, F24F 13/14, G05D 23/19, G05B 9/02, F24F 11/00

(54) **MOTORIZED GEAR AND COUPLING SYSTEM**
MOTORISIERTES GETRIEBE- UND KOPPELSYSTEM
ENGRENAGE MOTORISÉ ET SYSTÈME D'ACCOUPLEMENT

(30) Priority: 12.10.2007 US 974302; 31.03.2008 US 80007
(43) Date of publication of application: 18.05.2011
(73) Proprietor: Metropolitan Air Technology, Chicago, IL 60638 (US)
(72) Inventor: HOLLENDER, John, E., Chicago, IL 60608 (US); ALSBERG, Keith, Chicago, IL 60657 (US); BLAHA, Michael, Chicago, IL 60641 (US)
(74) Representative: Makovski, Priscilla Mary
(86) International application number: PCT/US2008/006391
(87) International publication number: WO 2009/048491

(56) References cited:
- US-A- 3 986 765
- US-A- 5 533 668
- US-A- 5 702 298
- US-A- 5 702 298
- US-A- 5 744 923
- US-A1- 2001 027 814
- US-A1- 2002 117 986
- US-A1- 2006 071 087
- US-A1- 2006 151 165
- US-A1- 2007 046 236
- US-A1- 2007 063 059
- US-B1- 6 364 211
- US-B2- 6 717 299

## Description

### CROSS-REFERENCE TO RELATED APPLICATIONS

This application is a continuation-in-part of U.S. Patent Application Number 11/974,302 filed on October 12, 2007, and entitled "GEAR AND COUPLING SYSTEM," which is incorporated by reference herein in its entirety.

### BACKGROUND

The invention relates to a system for controlling an airflow through a plenum according to claim 1. Worm and planetary gears work together to transfer rotational movement in one plane to another plane. The worm gear and planetary gear (also commonly referred to as a worm and worm gear, respectively) are placed in rotational engagement with each other so that the threads of the worm gear mesh with the teeth of the planetary gear. Thus, the longitudinal axis of the worm gear and that of the planetary gear are at right angles with each other so that rotational movement of one gear along its longitudinal axis is transferred to the other gear along its longitudinal axis.

The worm gear/planetary gear combination may be used to transfer the rotational movement of one shaft or other body to that of another shaft or body. This may be accomplished by coupling one of the shafts to the worm gear and the other to the planetary gear. Couplings are used to couple the shafts to the gears. In general, the couplings are separate elements, such as a nut or bearing, which must be separately attached to both the shaft and the gear. For example, the shaft may be inserted into the axle of the gear and held in place with a bearing.

The shafts coupled to the worm and planetary gears may by rotated manually. However, the gears can also be rotated by a motor. Thus, either the manual or motorized motion of one shaft is translated via the worm gear/planetary gear combination to another shaft or body.
U.S. Patent No. 5,744,923 (issued April 28, 1998), which is regarded as closest prior art, discloses an actuator motor coupled to an air damper. The actuator includes control electronics for operating the motor.

### SUMMARY

A gear system comprising a gear and coupling portion including a shaft, a worm gear, a planetary gear, a motor, and a means for controlling the motor is presented. The system may be supported by a bracket. The worm gear includes a coupler (a "worm coupling") integrated with the worm gear's axle. Thus, the axle and the coupler form one integrated element. To attach a shaft (the "worm shaft") to the worm coupling and a shaft (the "planetary shaft") to the planetary gear, the worm shaft and the planetary shaft are inserted into the worm coupling and the planetary coupling, respectively. Both couplings include bores through which set screws are inserted so that they engage the shafts. Thus, the shafts are held in place. Shafts of different sizes and shapes may be accommodated by the distance by which the set screws are inserted into the couplings.

The worm coupling includes a head and an elongated portion. The elongated portion may be inserted into and fixedly attached to the worm gear. In this manner, the elongated portion serves as the axle of the worm gear. The head of the worm coupling includes an opening into which the worm shaft is inserted and to which it is removably attached. To attach the worm shaft to the worm coupling, the head may include one or more bores into which set screws may be inserted so that they contact the worm shaft. The cross-sectional shape of the coupling and the worm shaft are generally complementary.

The planetary coupling couples a shaft (the "planetary shaft") with the planetary gear. The planetary coupling includes a bore into which the planetary shaft may be inserted and to which it is removably attached. To attach the planetary shaft to the planetary coupling, the planetary coupling may include one or more bores into which set screws may be inserted so that they contact the planetary shaft. By using a multiple of bores and set screws, such as four, the planetary coupling may accommodate planetary shafts with cross-sections significantly different and/or smaller than that of the planetary coupling. The cross-sectional shape of the planetary coupling and the planetary shaft may be complementary, however, this is not necessary.

The worm shaft is coaxially connected with a motor or gear-motor that rotates the worm shaft and, consequently, the worm gear. The motor is in electromechanical communication with the controller when the controller is connected to a modular interface. For example, the motor may be direct current, low voltage, low torque, and low rpm. The controller regulates the motor, particularly by activating and deactivating the motor as well as controlling the direction and distance the motor rotates the worm shaft. The controller also powers the motor, for instance, by battery. The controller may contain a processor and/or memory. The processor may be coupled to a sensor that deactivates the motor once the motor draws a certain level of current, indicating that the mechanism has reached the end of its range of motion.

### BRIEF DESCRIPTION THE DRAWINGS

The invention can be better understood with reference to the following drawings and description. The components in the figures are not necessarily to scale, emphasis instead being placed upon illustrating the principles of the invention. In the drawings:
FIG. 1. is a front isometric view of a gear and coupling system mounted on a bracket;
FIG. 2 is a front elevation view of the gear and coupling system mounted on a bracket shown in FIG. 1;
FIG. 3 is front isometric view of a the gear and coupling system mounted on a bracket shown in FIG. 1 receiving a first and second shaft;
FIG. 4 is a front elevation view of a the gear and coupling system mounted on a bracket shown in FIG. 1 receiving a first and second shaft;
FIG. 5 is an exploded isometric view of the coupling, first shaft and worm gear shown in FIG. 3;
FIG. 6 is an isometric view of the coupling, first shaft and worm gear shown in FIG. 3;
FIG. 7 is an isometric view of the gear and coupling system shown in FIG. 3 in operative communication with plenums in a duct;
FIG. 8 is an alternative embodiment of a gear and coupling system.
FIG. 9 is an isometric view of a motorized gear and coupling system;
FIG. 10 is a functional block diagram of the controller of FIG. 9; and
FIG. 11 a is a side elevation view of the motorized gear and coupling system shown in FIG. 9 adapted to operate a damper.
FIG. 11b is an isometric view of a wall plate for mounting multiple electrical connectors corresponding to multiple different motorized gear and coupling systems at different locations.
FIG. 12 is an isometric view of an alternative embodiment of a system for controlling airflow through a plenum.
FIG. 13 is a side elevation view of the system of FIG. 12, mounted in a plenum.

### DETAILED DESCRIPTION

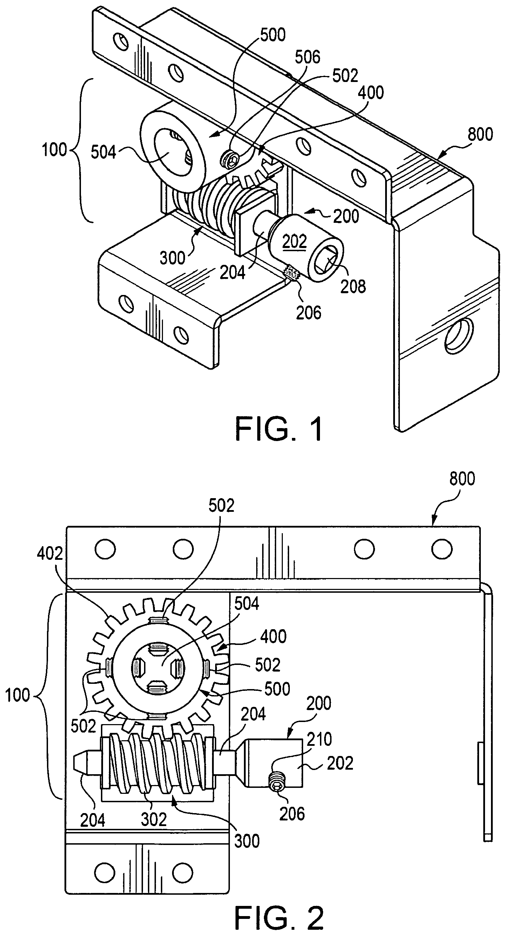

A gear and coupling system is shown in FIGS. 1 and 2. The system 100 generally includes a worm gear coupling 200, worm gear 300, planetary gear 400 and planetary gear coupling 500. As shown in FIGS. 1 and 2, the system 100 may be mounted on a bracket 800. The bracket 800 may include configurations that maintain the functional relationship among the elements of the system 100. The worm gear 300 and the planetary gear 400 are mounted at right angles to each other so that the threads 302 of the worm gear 300 intermesh with the teeth 402 of the planetary gear 400. In this arrangement, rotation of the worm gear 300 around its longitudinal axis will cause the planetary gear 400 to rotate around its longitudinal axis.

The worm gear coupling 200 includes a head 202 and an elongated portion 204. The worm gear 300 is coaxially attached around the elongated portion 204 along the longitudinal axis of the elongated portion 204. Thus, the elongated portion 204 serves as the axle of the worm gear 300 in one integrated element. The head 202 includes a bore 210 for receiving a set screw 206. Although one bore 210 and one set screw 206 are shown, a variety and number of bores 210 and set screws 206 may be included. The head also includes an opening 208.

The planetary gear coupling 500 is fixedly and coaxially attached to the planetary gear 400. In a preferred embodiment, planetary gear 400 and planetary gear coupling 500 are formed integrally as a single element. The planetary gear coupling 500 may include a number of bores 506 for receiving a number of set screws 502. Although four bores 506 and set screws 502 are shown in FIGS. 1 and 2, a variety and number of bores 506 and set screws 502 may be included.

Worm gear coupling 200, worm gear 300, planetary gear 400 and planetary gear coupling 500 may be formed of various materials that are known in the art, including metal and plastic. In a preferred embodiment, worm gear coupling 200 and worm gear 300 (and/or planetary gear 400 and planetary gear coupling 500) are integral and formed as a single element. Worm gear coupling 200, worm gear 300, planetary gear 400 and/or planetary gear coupling 500 may be made of various materials that are known in the art, including metal, nylon or acetal resin, and may be formed by milling, casting, molding or other methods known in the art that are appropriate to the material.

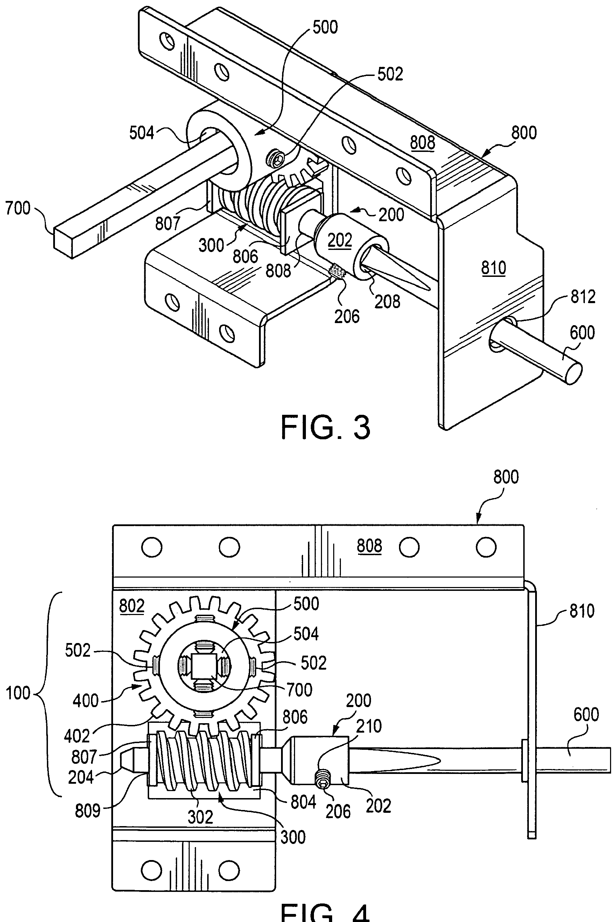

The gear and coupling system 100 may be used to translate the rotational motion of one body to another body along a different axis. For example, as shown in FIGS. 3 and 4, the system 100 may be used to translate the rotational movement of one shaft (a worm shaft 600) around the longitudinal axis of the worm gear 300 to another shaft (a planetary shaft 700) around the longitudinal axis of the planetary gear 400. The worm shaft 600 may serve as the drive shaft for the system 100. The worm shaft 600 and the planetary shaft 700 may be a rigid or flexible body, such as a flexible cable.

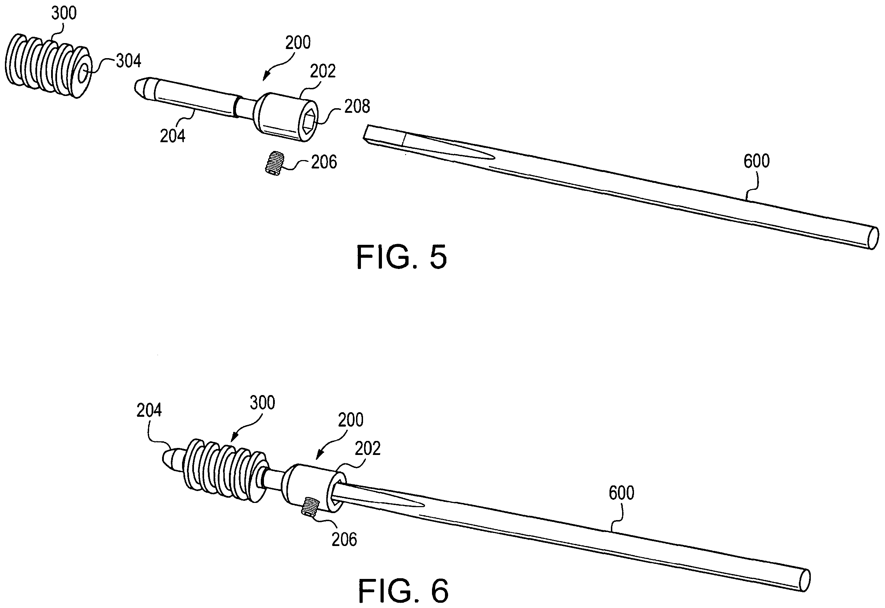

The worm shaft 600 may be removably coupled to the worm gear 300 via the worm coupling 200. As shown in FIGS. 5 and 6, the elongated portion 204 of the worm coupling 200 is inserted into the bore 304 in the worm gear 300. For example, the elongated portion 204 of the worm coupling 200 may be knurled and slightly larger in diameter than the bore 304. The elongated portion 204 is press fit into the worm gear 300. To couple the worm shaft 600 with the worm gear 300, the worm shaft 600 is inserted into the opening 208 in the head 202 of the worm coupling 200 and secured therein by one or more set screws 206. In addition to coupling the worm shaft 600 with the worm gear 300, the worm coupling 200, particularly the elongated portion 204, serves as the axle of the worm gear 300. Thus, rotation of the worm shaft 600 will cause the worm gear 300 to rotate along its longitudinal axis.

Referring again to FIGS. 3 and 4, the planetary shaft 700 may be removably coupled with the planetary gear 400 via the planetary coupling 500. The planetary shaft 700 is inserted into the bore 504 in the planetary coupling 500 and secured therein by the set screws 502. As shown in FIGS. 3 and 4, the planetary coupling 500 includes four bores 504 and four set screws 502.

The opening 208 in the worm coupling 200 may have a variety of cross-sectional shapes, which are generally complementary to the shape of the cross-section of the worm shaft 600. For example, as shown in FIG. 5, the opening 208 and the cross-section of the worm shaft 600 proximate to the worm coupling 200 has a square shape. Alternately, the opening 208 and the cross-section of the worm shaft 600 may have other shapes for example, circular or hexagonal. The bore 504 in the planetary coupling 500 may have a circular cross-section, which may receive planetary shafts 700 of various cross-sectional shapes, such as circular, square (which is shown in FIGS. 3 and 4) and hexagonal. By using a multiple of bores 504 and set screws 502, such as four, the planetary coupling 500 may accommodate planetary shafts 700 with cross-sections significantly smaller than that of the planetary coupling 500.

The system may be supported by a bracket 800. One example of such a bracket 800 is shown in FIGS. 1-4. As shown in FIGS. 3 and 4, the bracket may include a lower support 802, a side support 808 and an end support 810. The worm gear 300 and the planetary gear 400 are supported by the lower support 802. The planetary gear 400 is secured to the lower support 802 so that its longitudinal axis is about perpendicular with the lower support 802. The planetary gear 400 may go through a bore 504 in the lower support 802 and be attached to the bore 504 via a snap ring or retaining ring (not shown) located on the side of the lower support 802 opposite the planetary coupling 500. The lower support 802 includes a pair of protrusions 806 and 807 that support the worm gear 300. The protrusions 806 and 807 each include a bore 811 and 809, respectively, through which the axle of the worm gear 300 (the elongated portion 204 of the worm coupling 200) is inserted. To secure the worm gear 300 to the bracket 800, the elongated portion 204 may be knurled and press fit into one protrusion 806, the worm gear 300 and the other protrusion 807, respectively. The worm gear 300 and the planetary gear 400 are located on the lower support 802 of the bracket 800 in such proximity with each other so that the threads 302 of the worm gear 300 mesh with the teeth 402 of the planetary gear 400.

The side support 808 of the bracket 800 attaches the lower support 802 to the end support 810 so that the end support 810 faces the lower support 802. The end support 810 may include a bore 812 through which the worm shaft 600 may protrude. This arrangement provides support to the worm shaft 600 and aligns the longitudinal axis of the worm shaft 600 with that of the worm coupling 200.

The bracket 800 may be manufactured from a material such as metal or engineered plastic. The bracket 800 may be made from a single piece of material (for example, stamped in one piece from a single sheet of metal) and folded to obtain the desired shape. Alternately, the components of the bracket 800 may be manufactured separately and secured together via, for example, welding, screwing and/or soldering.

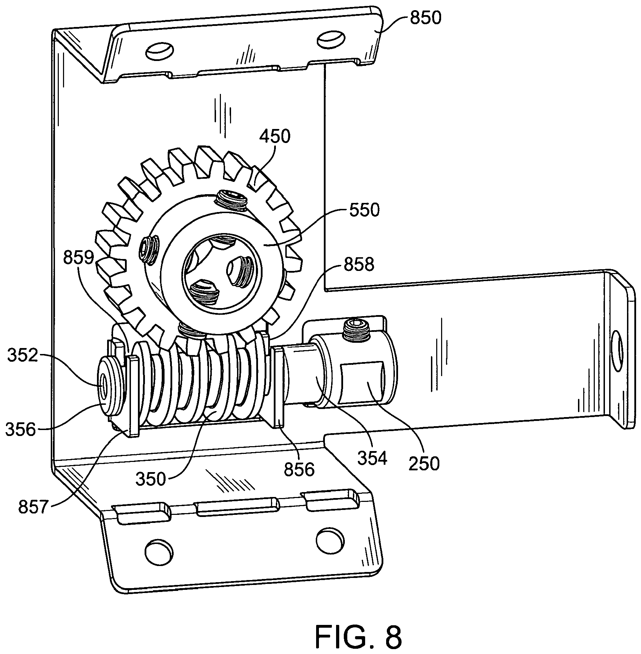

In an alternative embodiment, instead of having bores 811 and 809, protrusions 806 and 807 may be formed as yokes having an opening on the side toward the planetary gear. Referring to FIG. 8, a gear and coupling system is shown having a worm gear 350 and a planetary gear 450 that are mounted on a bracket 850. Bracket 850 is provided with yokes 856 and 857 having openings 858 and 859, respectively, on the side toward planetary gear 450. Axle 352 of worm gear 350 is inserted in openings 858 and 859 and supported on yokes 856 and 857. Axle 352 is further provided with a collar 354 and radial flange 356 that are positioned outside of yokes 856 and 857, respectively. Both collar 354 and radial flange 356 have diameters that are larger than openings 858 and 859, to prevent worm gear 350 from slipping laterally within yokes yokes 856 and 857. The assembly of planetary gear 450 on bracket 850 prevents worm gear 350 from inadvertently lifting out of yokes 856 and 857 and further secures worm gear 300 in place.

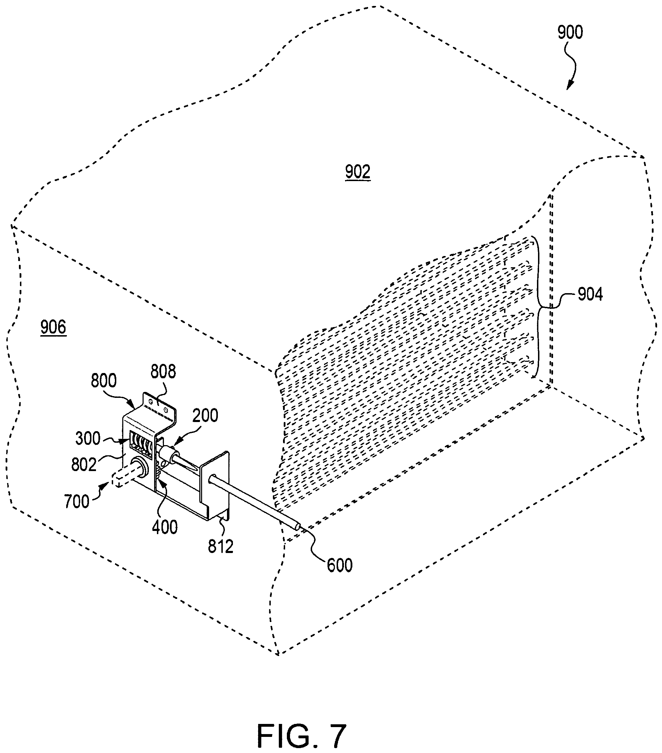

One application for which a gear and coupling system may be used is shown in FIG. 7. In this example, the gear and coupling system 100 is used to control the motion of a damper 904 within a plenum 900, such as a heating, ventilation and air conditioning (HVAC) duct. In the plenum 900, airflow is controlled by the position of the dampers 904. If the dampers 904 are positioned so that they are parallel with the top 902 of the plenum, the maximum amount of air is permitted to flow. In contrast, if the dampers 904 are positioned so that they are perpendicular with the top 902 of the plenum, air is restricted from flowing through the plenum 900. Movement of the dampers 904 is controlled by the rotation of the planetary shaft 700.

Due to the size and the shape of the aperture 504 and set screws 502 (see FIG. 3) in the planetary coupling 500, planetary shafts 700 of different sizes and shapes may be accommodated. For example, the aperture 504 and set screws 502 (see FIG. 3) may accommodate a 0.25 or 0.375 inch square shaft. Alternately, the aperture 504 and set screws 502 (see FIG. 3) may accommodate 0.25 or 0.5 inch round shaft 700.

Such plenums 900 may be located in areas that are not conveniently or easily accessible. For example, the plenum 900 may be located in a ceiling, wall or floor. Therefore, some type of device is needed to enable the dampers 904 to be remotely controlled. This device may include a worm shaft 600. The worm shaft 600 may include, for example, a flexible or non-flexible cable. If the plenum 900 is installed in a ceiling, the worm shaft 600, which is in communication with the worm coupling 200, may protrude from the ceiling. Thus, the dampers 904 may be controlled by rotating the protruding worm shaft 600.

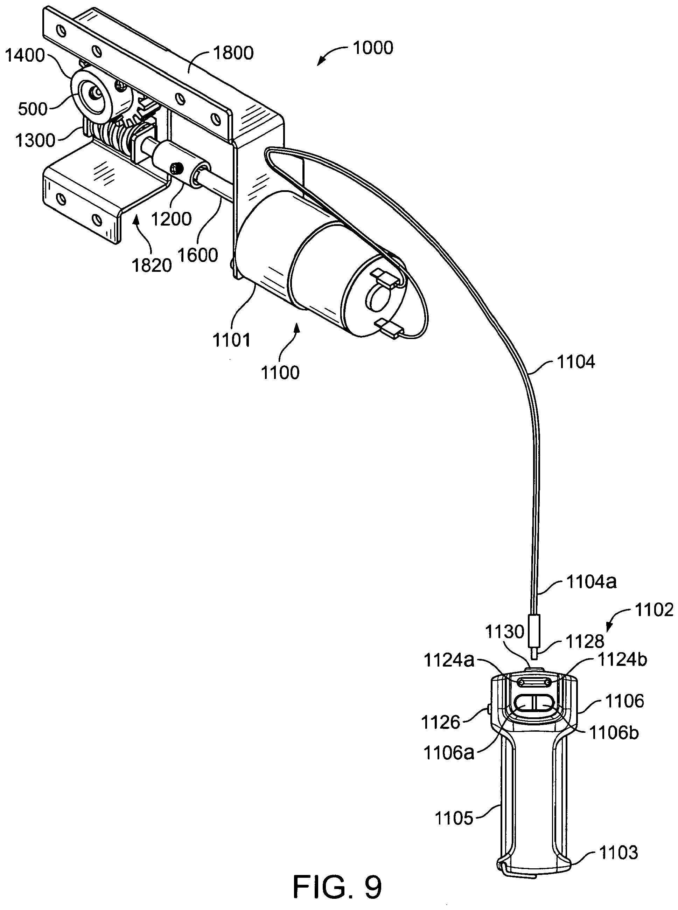

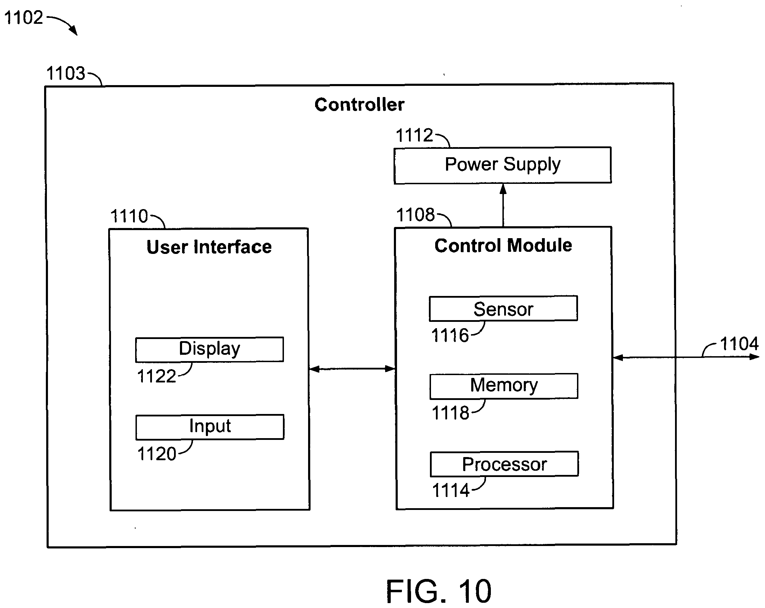

In an alternative embodiment, the rotation of the worm shaft may be driven by a motor. Referring to FIGS. 9 and 10, a motorized gear and coupling system 1000 is shown, which generally includes a worm gear coupling 1200, worm gear 1300, planetary gear 1400 and a planetary gear coupling 500, that are mounted on a bracket 1800. A worm shaft 1600 is coupled with worm gear 1300 through worm coupling 1200. A motor 1100 is mounted on end support 1810 of bracket 1800, that is connected with and configured to rotate worm shaft 1600. The motor 1100 may have an output shaft that serves as a drive shaft and is inserted directly into the worm coupling 1200, thus eliminating the need for a separate worm shaft. Motor 1100 may be removably mounted on bracket 1800 using bolts, screws or other fasteners (not shown) that are well known in the art. Motor 1100 is operated by a controller 1102, which is in electromechanical communication with the motor via a cable 1104.

Motor 1100 is preferably a direct current, low voltage motor (e.g., a 9 V, 12 V or 18 V motor) having low rpm and low torque. As is well known in the art, motor 1100 may be a gear-motor that includes a gear set 1101 to gear down the speed of the motor to accommodate the requirements of a particular application. When motorized gear and coupling system 1000 is used to control the motion of a damper, it is presently preferred that motor 1100 be geared down such that it takes approximately 10-15 seconds for the dampers to move from a position of maximum airflow to a position of minimum airflow (or vice versa). It has been found that a motor and gear set that rotates worm shaft 1600 in a range of about 30 rpm to about 35 rpm is particularly useful for controlling dampers when the gear and coupling system includes a worm gear and planetary gear. However, those of skill in the art will appreciate that the gear ratio of the worm gear and planetary gear (or other intervening gearing between the motor and the damper) may also be a factor in determining the optimal motor speed.

As best shown in FIGS. 9 and 10, controller 1102 includes a switch 1106, a control module 1108, a user interface 1110 and a power supply 1112. Control module 1108 includes a microprocessor 1114 and a sensor 1116. User interface includes an input 1120 and a display 1122. In a preferred embodiment, controller 1102 is a portable handheld device having a housing 1103 that contains switch 1106, control module 1108, user interface 1110 and power supply 1112. Housing 1103 may be ergonomically designed and may be provided with a textured grip 1105. Housing 1103 may be provided with other features to enhance its portability, such as a belt clip and/or retractable reel (not shown).

Motorized gear and coupling system 1000 is operated by actuating switch 1106, which provides a signal to microprocessor 1114 via input 1120. Microprocessor 1114, in turn, provides a current from power supply 1112 through cable 1104 to motor 1100, to drive worm shaft 1600 and operate gear and coupling system 1000. Sensor 1116 monitors the operation of motor 1100 and provides a signal to microprocessor 1114. Based on the signals from switch 1106 and/or from sensor 1116, microprocessor 1114 directs display 1122 to provide an indicia that reflects the operational condition of gear and coupling system 1000 and/or controls the current provided to motor 1100 from power supply 1112.

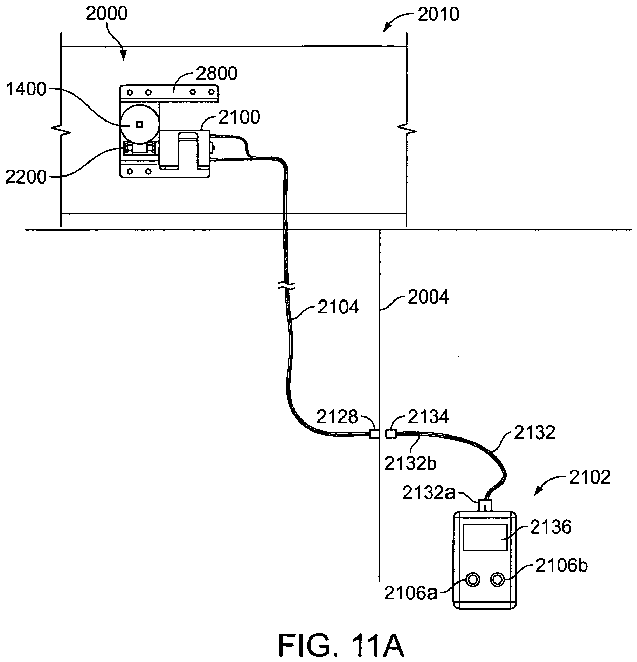

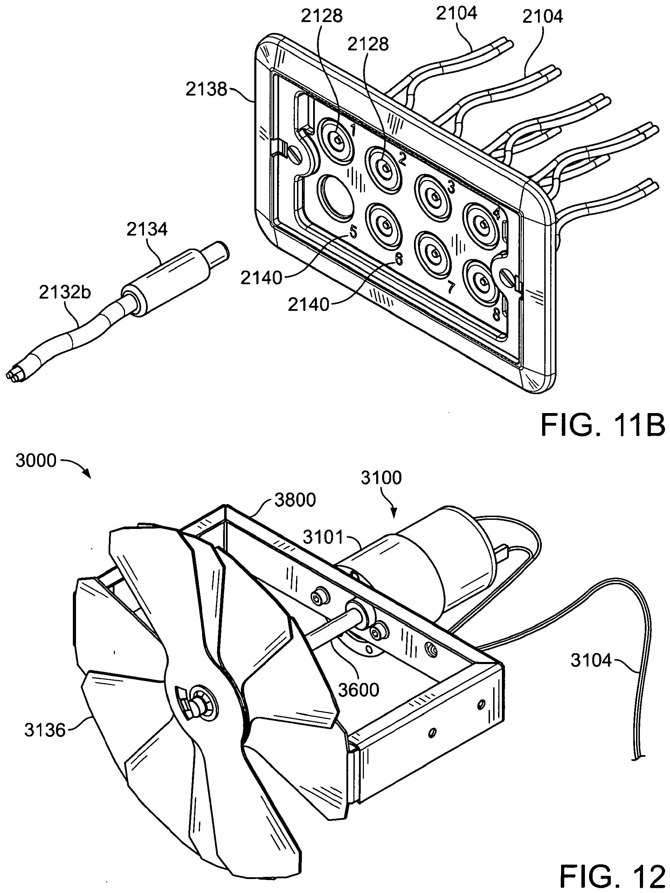

In a preferred embodiment, switch 1106 is a 3-position rocker switch having a rest position, a first position 1106a and a second position 1106b. Actuating switch 1106 at the first position 1106a sends a first signal to microprocessor 1114 to provide a current from power supply 1112 and operate motor 1100 to rotate worm shaft 1600 in a first, forward direction. Actuating switch 1106 at the second position 1106b sends a second signal to microprocessor 1114 to reverse the polarity of the current from power supply 1112 and operate motor 1100 to rotate worm shaft 1600 in a second, reverse direction. When neither position 1106a nor 1106b are actuated, switch 1106 returns to the rest position and no current is provided to motor 1100. Those of skill in the art will appreciate that other type of switches may be used, such as separate buttons 2106a and 2106b for forward and reverse, rather than a rocker switch, as shown in FIG. 11.

In a further preferred embodiment, sensor 1116 detects the level of current draw by motor 1100. In a first operating condition, motor 1100 rotates freely and sensor 1116 detects a first level of current draw and sends a first signal to microprocessor 1114. In a second operating condition, motor 1100 experiences resistance to rotation which increases the current draw by the motor. Sensor 1116 detects the increased current draw and sends a second signal to microprocessor 1114 to shut off the current from power supply 1112 to motor 1100.

Display 1122 is controlled by microprocessor 1114 in response to signals from rocker switch 1106 and/or sensor 1116. In a preferred embodiment, display 1122 comprises LEDs 1124a and 1124b that provide indicia of the operating condition of motor 1100. As best shown in FIG. 9, LEDs 1124a and 1124b positioned to correspond to first and second positions 1106a and 1106b of a rocker switch 1106. The actuation of rocker switch 1006 at first position 1106a sends a first signal to microprocessor 1114 which, in turn, directs first LED 1124a to provide a first indicia that motor 1100 is rotating in a first direction. When motor 1100 experiences resistance to rotation, such as when worm shaft 1600 is prevented from rotating, sensor 1116 sends a second signal to microprocessor 1114 which, in turn, directs first LED 1124a to provide a second indicia that motor 1100 has experienced a change in operating condition. LED 1124b similarly provides indicia that motor 1100 is operating in a second, reverse direction, and whether motor 1100 has experienced a change in operating condition.

For example, when motorized gear and coupling system 1000 is used to control the motion of a damper, actuating rocker switch 1106 at position 1106a causes the motor to rotate in a first direction and causes LED 1124a to turn green, indicating that the dampers are moving toward an open position to allow maximum airflow. Once the dampers are in the fully open position and have reached the end of their range of motion, worm shaft 1600 is prevented from further rotation, the current to motor 1100 is shut off, and LED 1124a turns red to indicate that the dampers have stopped moving and are fully open. Conversely, when rocker switch 1106 is actuated at position 1106b, motor 1100 operates in reverse and LED 1124b turns green, indicating that the dampers are moving toward a closed position to restrict airflow. Once the dampers are in the fully closed position and have reached the end of their range of motion in the opposition direction, worm shaft 1600 is once again prevented from further rotation, the current to motor 1100 is shut off, and LED 1124b turns red to indicate that the dampers have stopped moving and are fully closed, resulting in a minimum of airflow.

Power supply 1112 may be of any type sufficient to operate motor 1100. In a preferred embodiment, power supply 1112 is a low voltage power supply that is small enough for a portable device and is easily replaced, such as a 9 V battery. Controller 1102 may include a shutoff switch 1126 to turn off the controller and prevent the battery from being drained by the continuing draw from microprocessor 1114 or by the inadvertent actuation of switch 1106.

Controller 1102 is connected to motor 1100 by a cable 1104. Cable 1104 may be of any type suitable for the application. For example, when motorized gear and coupling system 1000 is used to control a damper, cable 1104 is preferably a two conductor, plenum rated cable or similar fire rated cable. The connections between cable 1104 and motor 1100 and/or between cable 1104 and controller 1102 may be soldered or may use any of a variety of electrical connectors that are known in the art. In a preferred embodiment, cable 1104 is detachably connected to controller 1102, to create a modular system where a single controller may be used with multiple different motorized gear and coupling systems 1000. As shown in FIG. 9, cable 1104 has an end 1104a that terminates in a standard 2.1 mm connector mini power plug 1128. Controller 1102 is provided with a corresponding mini power jack 1130 for receiving plug 1128. Those of skill in the art will appreciate that other types of detachable electrical connectors may be used, depending on the voltage of the power source and the type of information that is transmitted between motor 1100 and controller 1102.

Referring to FIGS. 11a and 11b, an alternative embodiment of a motorized gear and coupling system is shown that is adapted to operate a damper. Motorized gear and coupling system 2000 generally comprises a worm gear/coupling 2200, planetary gear/coupling 1400 and motor 2100 that are mounted on a bracket 2800, a cable 2104 and a controller 2102. Bracket 2800 is mounted at a plenum 2010, such as a ceiling plenum for use in an HVAC system. Preferably, motorized gear and coupling system 2000 is mounted on plenum 2010, but may also be mounted on a nearby structure. A damper (not shown) is mounted within plenum 2010 to regulate airflow, and is operated by motorized gear and coupling system 2000.

Cable 2104 extends from motor 2100 at plenum 2010 to a remote location and terminates in a detachable electrical connection 2128. In a preferred embodiment, electrical connection 2128 is mounted in a wall 2004 at a location that is conveniently accessible to the user. This configuration permits the gear and coupling system, including the motor, to be installed on a plenum, leaving the controller as the only external part of the system.

Controller 2102 includes a cable 2132 that has a first end 2132a that is connected to the controller and a second end 2132b that terminates in a detachable electrical connection 2134 which corresponds to detachable electrical connection 2128 of cable 2104. In a preferred embodiment, detachable electrical connections 2134 and 2128 are a mini power plug and jack, respectively. End 2132a of cable 2132 may be connected to controller 2102 by soldering or may use any of a variety of electrical connectors that are known in the art. In a preferred embodiment, end 2132a of cable 2132 is also connected to controller 2102 by a detachable electrical connection, such as a mini power plug/jack.

As best shown in FIG. 11b, a modular system may include a wall plate 2138 for mounting multiple electrical connections 2128 corresponding to different motorized gear and coupling systems. Wall plate 2138 is installed at a convenient location, such that multiple motorized gear and coupling systems at different locations may be easily controlled by alternately connecting the plug 2134 of a controller 2102 into the various electrical connectors 2128. Indicia 2140 may be provided on wall plate 2138 to identify the different motorized gear and coupling system associated with each electrical connection 2128.

In a further alternative embodiment, the controller may provide the user with additional information, such as battery life, identification of the damper being controlled, the position of the dampers relative to the fully open/closed position, and other information. To accommodate these additional features, the controller may be provided with an alphanumeric display 2136, rather than simple LEDs. The controller may also include a memory 1118 to store data. In addition, cables 2104 and 2132 may be four conductor cables with appropriate electrical connectors 2128, 2134.

Those of skill in the art will appreciate that the motorized gear and coupling system described herein is not limited to a worm gear and planetary gear, but may be adapted for use with other gearing systems, such as miter gears or a friction drive. Furthermore, in some cases, the operation of a damper may not require the translation of rotational movement, but may be directly driven by the motor through a drive shaft.

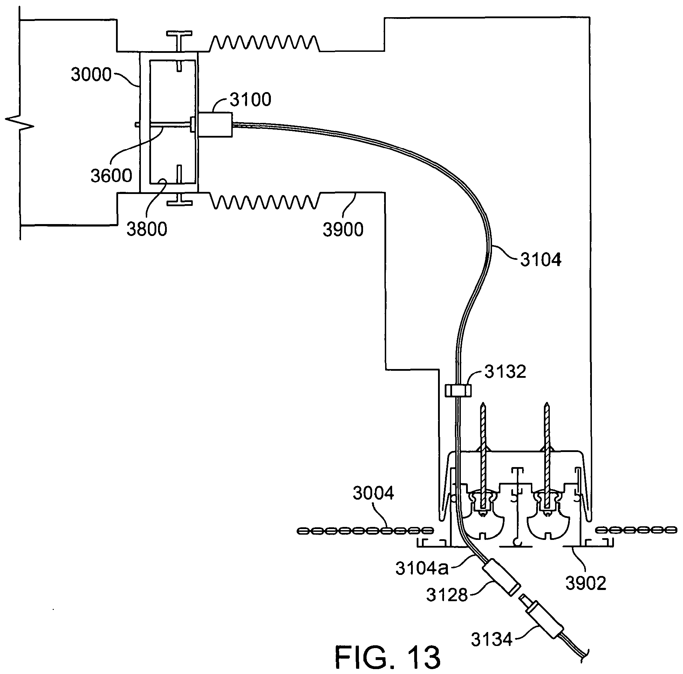

Referring to FIGS. 12 and 13, an alternative embodiment of a system for controlling airflow through a plenum is shown. A rotary damper 3000 and a motor 3100 are mounted on a bracket 3800. Motor 3100 is directly connected to rotary damper 3000 by a drive shaft 3600, without intervening gearing. Rotary damper 3000 may be removably coupled to drive shaft 3600 by a coupling (not shown) in the same manner as previously described couplings 200 and 500. A controller (not shown) is connected to motor 3100 by cable 3104.

The movement of rotary damper 3000 between open (maximum airflow) and closed (restricted airflow) positions is controlled by the rotation of drive shaft 3600. The operation of motor 3100 causes drive shaft 3600 to rotate damper blades 3136 and either open or close damper 3000, depending on the direction of rotation of the motor. Those of skill in the art will appreciate that it requires less than a single revolution of drive shaft 3600 to rotate damper blades 3136 from a fully open to a fully closed position (or vice versa). Thus, in a preferred embodiment, motor 3100 is a gear-motor that contains an appropriate gear set 3101 to gear down the motor and ensure that it takes approximately 10 to 15 seconds for damper blades 3136 to move between open and closed positions. It has been found that a gear motor capable of rotating drive shaft 3600 at a speed of about 2.5 rpm is particularly useful.

Referring to FIG. 13, rotary damper 3000 and motor 3100 are shown mounted in a plenum 3900 to control the airflow through the plenum. Thus, motor 3100 is positioned in the airstream when used in an HVAC system or other regulated airflow system. Cable 3104 may extend from motor 3100 through plenum 3900 to a remotely located diffuser 3902 or other opening in the plenum system. In a preferred embodiment, diffuser 3902 is located in a ceiling 3004 or other structure where the end 3104a of cable 3104 is conveniently accessible for connection to a controller. End 3104a of cable 3104 is provided with a detachable electrical connector 3128 (e.g., a mini power jack) for connection to the corresponding detachable electrical connector 3134 (e.g., a mini power plug) of a controller. In addition, end 3104a may be secured to plenum 3900 at or near diffuser 3902, using a clamp 3132 or by other means known in the art.

In an alternative embodiment, cable 3104 may exit the plenum through a hole in the wall of the plenum (not shown) that is made by drilling, punching or other means known in the art. The hole may be provided with a grommet (not shown) to protect cable 3104 from fraying or shearing caused by the edges of the hole. Cable 3104 extends from motor 3100 at plenum 3900 to a remote location and terminates in a detachable electrical connection, such as previously described wall plate 2138.

## Claims

1. A system for controlling airflow through a plenum having a damper within the plenum, the damper having a first position permitting maximum airflow and a second position restricting airflow through the plenum, and a motor (1100) positioned at the plenum for moving the damper between the first and second positions;
a power supply (1112);
a display (1122);
a microprocessor (1114) for controlling the display (1122) and the current provided by the power supply (1112);
a sensor (1116) for detecting an operating condition of the motor (1100) and sending a signal to the microprocessor (1114); and
switch (1106) for sending a signal to the microprocessor (1114);
wherein the microprocessor (1114) provides a current from the power supply (1112) to the motor (1100) in response to the signal from the switch (1106), and directs the display (1122) to provide an indicia in response to a signal from the sensor (1116), **characterized in that** the system further comprises a handheld controller (1102) connected to the motor (1100) at a remote location, including said power supply for providing a current which powers the motor (1100), and **in that** said display (1122), said microprocessor (1114), said sensor (1116) and said switch (1106) are provided in the handheld controller.

2. The system of claim 1, further comprising a cable (1104) having a first end connected to the motor (1100), and a second end removably connected to the controller (1102) at a remote location.

3. The system of claim 2, wherein the cable (2104) is connected to the controller (2102) by a detachable electrical connection (2128, 2134).

4. The system of claim 3, wherein the detachable electrical connection comprises a mini power plug (3134) and a mini power jack (3128).

5. The system of any preceding claim, further comprising a gear and coupling system for translating the movement of the motor to the movement of the damper, the gear and coupling system comprising:
a worm gear (300) in rotational engagement with a worm wheel (400);
a first shaft (600) removably coupled to the worm gear (300); and
a second shaft (700) removably coupled to the worm wheel (400) and operatively coupled with the damper.

6. The system of claim 5, further comprising:
a first coupling (200) integral with the worm gear (300) and having a first bore (208) configured to receive the first shaft (600); and
a second coupling (500) integral with the worm wheel (400) and having a second bore (504) configured to receive the second shaft (700), the second shaft (700) having a cross-section that is smaller and has a different shape than the second bore (504).

7. The system of claim 6, wherein the second coupling (500) is configured to receive a set screw (502) for removably securing the second shaft (700) within the second bore (504).

8. The system of claim 7, wherein the first shaft (600) has a cross-section that is smaller and has a different shape than the first bore (208).

9. The system of claim 8, wherein the first coupling (200) is configured to receive a set screw (206) for removably securing the first shaft (600) within the first bore (208).

10. The system of claim 5, wherein the motor (1100) is configured to rotate the first shaft (600).

11. The system of claim 1, wherein the plenum is a plenum system having a plurality of dampers within the plenum system, each damper having a motor for moving the damper between a first position permitting maximum airflow and a second position restricting airflow through the plenum system, and wherein the handheld controller further comprises:
a detachable electrical connector (3128, 3134) for connecting the handheld controller (1102) to the motor (1100) of any of the plurality of dampers at a remote location;
wherein the microprocessor (1114) further directs the display (1122) to provide an indicia in response to the operating condition of the motor (1100).

12. The system of claim 11, wherein the display (1122) provides an indicia of the direction of rotation of the motor (1100).

## Patentansprüche

1. Ein System für die Steuerung eines Luftstroms durch eine Luftkammer mit einer Luftklappe innerhalb der Luftkammer, die Luftklappe hat dabei eine erste Position, die einen maximalen Luftstrom erlaubt, und eine zweite Position, die den Luftstrom durch die Luftkammer begrenzt, und einen Motor (1100), der in der Luftkammer untergebracht ist, um die Luftklappe zwischen der ersten und der zweiten Position zu bewegen;
eine Stromzufuhr (1112);
ein Display (1122);
einen Mikroprozessor (1114) für die Steuerung des Displays (1122) und des Stroms, der von der Stromzufuhr (1112) bereitgestellt wird;
einen Sensor (1116) für das Erfassen eines Betriebszustands des Motors (1100) und Weitergabe eines Signals an den Mikroprozessor (1114); und
einen Schalter (1106) für das Senden eines Signals an den Mikroprozessor (1114); wobei der Mikroprozessor (1114) einen Strom von der Stromzufuhr (1112) zum Motor (1100) bereitstellt, in Reaktion auf das Signal vom Schalter (1106), und das Display (1122) steuert, um ein Zeichen in Reaktion auf ein Signal vom Sensor (1116) bereitzustellen, **dadurch gekennzeichnet, dass** das System darüberhinaus eine tragbare Steuereinheit (1102) aufweist, die mit dem Motor (1100) an einem entfernten Standort verbunden ist, einschließlich der Stromzufuhr für die Bereitstellung eines Stroms, der den Motor (1100) antreibt, und wobei das Display (1122), der Mikroprozessor (1114), der Sensor (1116) und der Schalter (1106) in der tragbaren Steuereinheit untergebracht sind.

2. Das System nach Anspruch 1, das darüberhinaus ein Kabel (1104) mit einem ersten Ende aufweist, das mit dem Motor (1100) verbunden ist, und ein zweites Ende, das abnehmbar mit der Steuerung (1102) an einem entfernten Standort verbunden ist.

3. Das System nach Anspruch 2, wobei das Kabel (2104) mit der Steuerung (2102) über einen abschaltbaren Elektroanschluss (2128, 2134) verbunden ist.

4. Das System nach Anspruch 3, wobei der abschaltbare Stromanschluss einen Mini-Netzstecker (3134) und eine Mini-Steckdose (3128) aufweist.

5. Das System nach einem der vorhergehenden Ansprüche, das darüberhinaus ein Getriebe- und Koppelsystem für die Übertragung der Bewegung des Motors auf die Bewegung der Luftklappe aufweist, das Getriebe- und Koppelsystem weisen dabei Folgendes auf:
ein Schneckengetriebe (300) in Drehverbindung mit einem Schneckenrad (400);
eine erste Welle (600), die abnehmbar mit dem Schneckengetriebe (300) gekoppelt ist; und
eine zweite Welle (700), die abnehmbar mit dem Schneckenrad (400) und betriebsbereit mit der Luftklappe gekoppelt ist.

6. Das System nach Anspruch 5, das darüberhinaus Folgendes aufweist:
eine erste Kupplung (200), die in das Schneckengetriebe (300) eingebunden ist und eine erste Bohrung (208) hat, die so gestaltet ist, dass sie die erste Welle (600) aufnehmen kann;und
eine zweite Kupplung (500), die in das Schneckenrad (400) eingebunden ist und eine zweite Bohrung (504) hat, die so gestaltet ist, dass Sie die zweite Welle (700) aufnehmen kann, die zweite Welle (700) hat dabei einen Querschnitt, der geringer ist und eine andere Form hat als die zweite Bohrung (504).

7. Das System nach Anspruch 6, wobei die zweite Kupplung (500) so gestaltet ist, dass sie eine Feststellschraube (502) für die lösbare Befestigung der zweiten Welle (700) in der zweiten Bohrung (504) aufnehmen kann.

8. Das System nach Anspruch 7, wobei die erste Welle (600) einen Querschnitt hat, der geringer ist und eine andere Form hat als die erste Bohrung (208).

9. Das System nach Anspruch 8, wobei die erste Kupplung (200) so gestaltet ist, dass sie eine Feststellschraube (206) für die lösbare Befestigung der ersten Welle (600) in der ersten Bohrung (208) aufnehmen kann.

10. Das System nach Anspruch 5, wobei der Motor (1100) so gestaltet ist, dass er die erste Welle (600) antreiben kann.

11. Das System nach Anspruch 1, wobei die Luftkammer ein Luftkammersystem ist mit einer Vielzahl von Luftklappen innerhalb des Luftkammersystems, jede Luftklappe hat dabei einen Motor für die Bewegung der Luftklappe zwischen einer ersten Position, die einen maximalen Luftstrom erlaubt, und einer zweiten Position, die den Luftstrom durch das Luftkammersystem beschränkt, und wobei das tragbare Steuergerät darüberhinaus Folgendes aufweist:
einen abschaltbaren Elektroanschluss (3128, 3134) für die Verbindung des tragbaren Steuergeräts (1102) mit dem Motor (1100) einer der Vielzahl von Luftklappen an einem entfernten Standort;
wobei der Mikroprozessor (1114) darüberhinaus das Display (1122) steuert, um ein Zeichen in Reaktion auf den Betriebszustand des Motors (1100) bereitzustellen.

12. Das System nach Anspruch 11, wobei das Display (1122) ein Zeichen zur Drehrichtung des Motors (1100) bereitstellt.

## Revendications

1. La présente invention concerne un système pour contrôler le débit d'air à travers un plénum ayant un amortisseur à l'intérieur du plénum, l'amortisseur ayant une première position permettant un débit d'air maximal et une deuxième position limitant le débit d'air à travers le plénum, et un moteur (1100) positionné au niveau du plénum pour déplacer l'amortisseur entre la première et la deuxième position ;
une alimentation électrique (1112) ;
un dispositif d'affichage (1122) ;
un microprocesseur (1114) pour contrôler le dispositif d'affichage (1122) et le courant fourni par l'alimentation électrique (1112) ;
un capteur (1116) pour détecter une condition de fonctionnement du moteur (1100) et envoyer un signal au microprocesseur (1114) ; et
un interrupteur (1106) pour envoyer un signal au microprocesseur (1114) ;
dans lequel le microprocesseur (1114) fournit un courant de l'alimentation (1112) au moteur (1100) en réponse au signal provenant de l'interrupteur (1106) et dirige le dispositif d'affichage (1122) pour fournir un indice en réponse à un signal à partir du capteur (1116), **caractérisé en ce que** le système comprend en outre une télécommande portative (1102) connectée au moteur (1100) à un emplacement distant, comprenant ladite alimentation électrique pour fournir un courant qui alimente le moteur (1100) et **en ce que** ledit dispositif d'affichage (1122), ledit microprocesseur (1114), ledit capteur (1116) et ledit interrupteur (1106) sont fournis dans la télécommande portative.

2. Système selon la revendication 1, comprenant en outre un câble (1104) ayant une première extrémité connectée au moteur (1100), et une deuxième extrémité connectée de manière amovible au dispositif de commande (1102) à un emplacement distant.

3. Système selon la revendication 2, dans lequel le câble (2104) est connecté au dispositif de commande (2102) par une connexion électrique amovible (2128, 2134).

4. Système selon la revendication 3, dans lequel la connexion électrique amovible comprend une mini fiche d'alimentation (3134) et un mini connecteur femelle d'alimentation (3128).

5. Système selon l'une quelconque des revendications précédentes, comprenant en outre un système d'engrenage et de couplage pour traduire le mouvement du moteur vers le mouvement de l'amortisseur, le système d'engrenage et de couplage comprenant :
un engrenage à vis sans fin (300) en contact rotatif avec une roue à vis sans fin (400) ;
un premier arbre (600) couplé de manière amovible à l'engrenage à vis sans fin (300) ; et
un deuxième arbre (700) couplé de manière amovible à la roue à vis sans fin (400) et couplé de manière fonctionnelle à l'amortisseur.

6. Système selon la revendication 5, comprenant en outre :
un premier couplage (200) solidaire de l'engrenage à vis sans fin (300) et ayant un premier alésage (208) configuré pour recevoir le premier arbre (600) ; et
un deuxième couplage (500) solidaire de la roue à vis sans fin (400) et ayant un deuxième alésage (504) configuré pour recevoir le deuxième arbre (700), le deuxième arbre (700) ayant une section transversale plus petite et ayant une forme différente de celle du deuxième alésage (504).

7. Système selon la revendication 6, dans lequel le deuxième couplage (500) est configuré pour recevoir une vis d'arrêt (502) pour fixer de manière amovible le deuxième arbre (700) à l'intérieur du deuxième alésage (504).

8. Système selon la revendication 7, dans lequel le premier arbre (600) a une section transversale qui est plus petite et a une forme différente de celle du premier alésage (208).

9. Système selon la revendication 8, dans lequel le premier couplage (200) est configuré pour recevoir une vis d'arrêt (206) pour fixer de manière amovible le premier arbre (600) à l'intérieur du premier alésage (208).

10. Système selon la revendication 5, dans lequel le moteur (1100) est configuré pour faire tourner le premier arbre (600).

11. Système selon la revendication 1, dans lequel le plénum est un système de plénum comportant une pluralité d'amortisseurs dans le système de plénum, chaque amortisseur ayant un moteur pour déplacer l'amortisseur entre une première position permettant un débit d'air maximal et une deuxième position limitant le débit d'air dans le système de plénum, et dans lequel la télécommande portative comprend en outre :
un connecteur électrique amovible (3128, 3134) pour connecter la télécommande portative (1102) au moteur (1100) de l'un quelconque de la pluralité d'amortisseurs à un emplacement distant ;
dans lequel le microprocesseur (1114) dirige en outre le dispositif d'affichage (1122) pour fournir un indice en réponse à l'état de fonctionnement du moteur (1100).

12. Système selon la revendication 11, dans lequel le dispositif d'affichage (1122) fournit un indice du sens de rotation du moteur (1100).
